# EUROPÄISCHE PATENTSCHRIFT

(11) **EP 2 409 809 B1**
(45) Veröffentlichungstag und Bekanntmachung des Hinweises auf die Patenterteilung: **05.03.2014**
(21) Anmeldenummer: 11005980.5
(22) Anmeldetag: 21.07.2011
(51) Int. Cl.: B23P 19/02

(54) **Radsatzpresse zum Aufpressen von Radscheiben auf Radsatzwellen von Schienenfahrzeugen sowie Verfahren zum Aufpressen von Radscheiben auf Radsatzwellen von Schienenfahrzeugen**
Wheel set press for pressing wheel discs to wheel set shafts of rail vehicles and method for pressing wheel discs to wheel set shafts of rail vehicles
Presse pour essieux destinée à l'application de disques de roues sur des arbres d'essieux de véhicules sur rails et procédé d'application par pressage de disques de roues sur des arbres d'essieux de véhicules sur rails

(30) Priorität: 21.07.2010 DE 202010010496 U
(43) Veröffentlichungstag der Anmeldung: 25.01.2012
(73) Patentinhaber: M A E Maschinen- und Apparatebau Götzen GmbH, 40699 Erkrath (DE)
(72) Erfinder: Mitze, Manfred, 58300 Wetter (DE)
(74) Vertreter: Schumacher, Horst

(56) Entgegenhaltungen:
- WO-A1-2009/021500
- US-A- 3 713 198
- US-A- 3 995 361
- DATABASE WPI Week 198819 Thomson Scientific, London, GB; AN 1988-131861 XP002660813, -& SU 1 344 568 A (LENGD RAIL TRANSP) 15. Oktober 1987 (1987-10-15)

## Beschreibung

### GEBIET DER ERFINDUNG

Die Erfindung betrifft eine Radsatzpresse nach dem Oberbegriff von Anspruch 1 sowie ein Verfahren zum Aufpressen von Radscheiben auf Radsatzwellen von Schienenfahrzeugen gemäß dem Oberbegriff von Anspruch 12. Demnach ist eine Radsatzpresse zum Aufpressen von Radscheiben auf Radsatzwellen von Schienenfahrzeugen vorgesehen. Zwei auf einer gemeinsamen Geraden an feststehenden Pressenständern angeordnete, gegeneinander gerichtete Kolben/ZylinderEinheiten bringen den notwenigen Pressdruck zum Aufpressen der jeweils zugehörenden Radscheibe auf die Radsatzwelle auf. Ferner sind Mittel zur Aufnahme der Radsatzwelle in der Radsatzpresse für den Pressvorgang vorgesehen, wie zwei einander gegenüberliegende Zentrierspitzen. Ferner vorgesehen sind Mittel zur Verlagerung der Radsatzwelle in Längsrichtung der Radsatzwelle zum Bewirken eines Zentrierens der Radsatzwelle. Zum Übertragen der Presskraft auf das zugewandte Ende der zugehörenden Radscheibe sind innen hohle Druckstempel an den Kolben/Zylinder-Einheiten vorgesehen, durch die Druckstempel ist je mindestens ein Mittel zur Verlagerung der Radsatzwelle hindurchgeführt. Mit derartigen Radsatzpressen können, grundsätzlich, auch Bremsscheiben und/oder Getriebeteile auf und ggf. abgepresst werden.

### TECHNOLOGISCHER HINTERGRUND

Nicht gattungsgemäß Radsatzpressen sind in verschiedenen Ausführungen seit langen bekannt. So beschreibt die US 3,713,198A eine Radsatzpresse zum sequentiellen, dass heißt nacheinander erfolgenden Aufpressen der ersten und der zweiten Radscheibe. Hierzu wird die jeweilige Radscheibe von dem ihr zugeordneten innen hohlen Presskolben axial gegen die an ihrem gegenüberliegenden Ende vom dortigen Pressenständer abgestützte Radsatzwelle aufgepresst. Der aktive Presskolben bewegt dabei einen Messfühler mit einem Endeinschlag, welcher mittels eines Gestänges zentral durch den innen hohlen Presskolben geführt ist. Bei erreichen der Soll-Position der Radscheibe bezüglich des zugehörenden Endes der Radsatzwelle wird durch den Messfühler ein Endschalter zum Abschalten des Pressenantriebs tätig. Bei penibler Justierung des Messfühlers und des Endschalteranschlages wird dadurch erreicht, dass die jeweilige Radscheibe in Abhängigkeit von der tatsächlichen Länge der Radsatzwelle und der Referenzfläche der Radscheibe ausreichend weit auf das Wellenende aufgeschoben wird.

Bei einer gattungsgemäßen Radsatzpresse gemäß WO 2009/021500A1 von der die Erfindung ausgeht, sind die innen hohlen Presskolben als Zylinders einer weiteren Kolben/Zylinder-Einheit gestaltet. In dem innen hohlen Presskolben ist ein eine Zentrierspitze für die Radsatzwelle tragender Kolben hydraulisch bewegbar. Zum gleichzeitigen Aufpressen von zwei Radscheiben auf die Radsatzwelle wird zunächst der eine Zentrierkolben kraftgeregelt und der gegenüberliegende Zentrierkolben positionsgeregelt gegen die zugehörenden Enden der Radsatzwelle vorgefahren. Sodann fahren die beidseitigen Presszylinder positionsgeregelt gegen die jeweils zugehörende Radscheibe, bis diese auf der Radsatzwelle die gewünschte Endposition erreicht haben. Ortsfest vorgesehene Messeinrichtungen erfassen die Hübe sowohl der Zentrierkolben als auch der Presskolben, wobei eine Steuereinrichtung in Abhängigkeit vom Hub der Kolben deren Beaufschlagung mit Druckmittel regelt.

Die US 3,995,361 offenbart die Merkmale der Oberbegriffe der Ansprüche 1 und 12.

### DARSTELLUNG DER ERFINDUNG

Davon ausgehend löst die Erfindung das Problem, gattungsgemäße Radsatzpressen zu vereinfachen. Hierzu schlägt die Erfindung einer Radsatzpresse mit den Merkmalen des Anspruchs 1 und ein Verfahren mit den Merkmalen des Anspruchs 12 vor. Demnach sieht die Erfindung bei einer gattungsgemäßen Radsatzpresse mindestens eine, insbesondere mechanische, lösbare Fixiereinrichtung vor, die am Umfang mindestens einer als Mittel zum Verlagern der Radsatzwelle dienenden Stange angreift, so dass die Stange und die Radsatzwelle in der gewünschten Zentrierposition in Längsrichtung der Radsatzwelle, insbesondere mechanisch, fixiert wird. Hierdurch wird unter anderem eine bessere Positionsgenauigkeit und insbesondere eine bessere Zentriergenauigkeit der Radsatzwelle erzielt, da die Fixierung der Radsatzwelle auch bei Auftreten von Störkräften störungsfrei die Position hält, während hydraulische Regelkreise nach dem Stand der Technik zu gewissen Regelschwingungen neigen, die angesichts ein der geforderten Positionsgenauigkeit der Räder von zum Beispiel +/- 0,3 durchaus nennenswert sein können. Zudem wird der erhebliche Aufwand für die nach dem Stand der Technik erforderlichen hydraulischen Regelkreise sowie der Fertigungs- und Montageaufwand vermindert. Außerdem wird die Anlagensicherheit verbessert, denn bei Ausfall der elektrischen Energieversorgung, die in manchen Regionen der Erde durchaus häufig vorkommt, wird nach der Erfindung der zwischen den Stangen und Zentriermitteln gehaltene Radsatz durch die Fixierung am Umfang der Stangen dauerhaft fixiert, ohne dass - wie öfters bei hydraulischen Systemen mit ihren unvermeidlichen Leckagen - es zu einem Absturz mit eventuellen Personen-/ oder Sachgefährdungen kommt, wenn auf den Stromausfall nicht rechtzeitig reagiert wird. Dieser Sicherheitsgewinn ist für eine Vielzahl von gattungsgemäßen Radsatzpressen nutzbar und insbesondere auch für Anlagen mit synchronen Aufpressen der Radscheiben.

Unter einer lösbaren Fixiereinrichtung, die am Umfang der Stange angreift, wird im Sinne der Erfindung eine Einrichtung verstanden, die am Umfang der in ihrer Längsrichtung verlagerbaren Stange derart angreift oder angreifen kann, dass die Einrichtung eine Längsverlagerung der Radsatzwelle in ihrem fixierten Betriebszustand völlig oder so gut wie völlig unterbindet und in ihrem nicht fixierten Betriebszustand eine Längsverlagerung der Radsatzwelle und/oder eine Längsverlagerung der Stange gestattet oder bewirkt. Unter Zentrieren der Radsatzwelle wird im Sinne der Erfindung in erster Linie das Zentrieren der Radsatzwelle in ihrer Längsrichtung in Beziehung zu den dem Aufpressen der Radscheiben dienenden Kolben/Zylinder-Einheiten bzw. deren Pressflächen verstanden.

Es ist nun auf verschiedene Weise möglich, die Erfindung auszuführen:
Wenn als Fixiereinrichtung eine radial wirkende mechanische Klemmeinrichtung verwendet wird, können am Markt erhältliche Standardfixiereinrichtungen verwendet werden, wie sie zum Beispiel als Klemmköpfe der Firma SITEMA GmbH & Co. KG in Karlsruhe auf dem Markt erhältlich sind. An Stelle eines Fixierens durch reibschlüssiges Klemmen wird das Ziel der Erfindung auch durch formschlüssiges Einspannen und Verlagerung der Radsatzwelle erreicht, beispielsweise durch Ausgestaltung der Stangen als Gewindespindeln, die durch relatives Verdrehen in Bezug auf ein korrespondierendes Innengewinde axial in die Sollposition verlagerbar sind. Das "lösbare Fixieren" erfolgt dann z. B. durch Selbsthemmung.

Wenn die Fixiereinrichtungen an den zugehörigen Pressenständern und/oder an den zughörigen Kolben/Zylinder-Einheiten abgestützt werden, wird dadurch die Kompaktheit der Radsatzpresse erhöht und der Montageaufwand verringert.

Die Stangen zum Verlagern der Radsatzwelle können grundsätzlich, wie aus der WO 2009/021500A1 bekannt, mit einem innerhalb des hohlen Presskolbens hydraulisch verfahrbaren Kolben ausgestattet sein. Wenn hingegen, wie bevorzugt, diese Stangen kolbenfrei gestaltet sind, wird dadurch der Fertigungs- und Montageaufwand der Kolben/Zylinder-Einheiten erheblich verringert. Vor allem die Druckmittel Zufuhr zum inneren Kolben, welche komplizierte Bohrungen und flexible, regelmäßig zu wechselnde Schlauchverbindungen erfordert, entfallen dadurch. Auch kann der Presskolben dadurch vergleichsweise kleinkalibrig ausfallen, da in seinem hohlem inneren der Flächenverlust durch einen inneren Kolben vermieden wird. Dieser Flächenverlust ist bei einer durchgehenden, kolbenfreien Stange deutlich geringer.

Die Stangen zum Verlagern der Radsatzwelle können auf verschiedene Weise angetrieben werden, nämlich zum Beispiel durch die oben erwähnte Rotation einer spindelförmig gestalteten Stange. Bei einer anderen Ausführungsform erfolgt der Antrieb der Stangen außerhalb der Press-Kolben/Zylinder-Einheit mittels einer als Verstell-Kolben/Zylinder-Einheit gestaltbaren Verstelleinrichtung. Diese benötigt nur eine vergleichsweise geringe maximale Antriebskraft. Um den Radsatz, zum Beispiel durch Zentrierspitzen, sicher zu fixieren reicht es, wenn die Schließkraft einer Verstell-Kolben/Zylinder-Einheit in der Größenordnung des Gewichts des Radsatzes liegt, also zum Beispiel in der Größenordnung von 20 kN. Hierzu können Kolben/Zylinder-Einheiten aus Serienfertigungen mit geringen Beschaffungskosten verwendet werden.

Periodisch zu wechselnde Schlauchverbindungen, wie sie bei VerstellKolben/Zylinder-Einheiten im Inneren einer radial außenliegenden PressKolben/Zylinder-Einheit erforderlich sind, entfallen. Die Verstelleinrichtungen können an dem jeweils zugehörenden Pressenständer ortsfest und wenig aufwendig abgestützt werden.

Erfindungsgemäße Radsatzpressen können, wie erwähnt, grundsätzlich auch sequentiell die Radscheiben auf die Radsatzwelle aufpressen. Bevorzugt wirken die Druckstempel gleichzeitig auf die beiden Radscheiben ein. Dadurch heben sich die auf die Radsatzwelle wirkenden Axialkräfte des Aufpressens auf, so dass die Fixiereinrichtungen axial vergleichsweise geringfügig belastet werden.

Eine Messeinrichtung für die Positionsmessung der Radsatzwelle kann grundsätzlich auf verschiedene Weise, also auch so wie in WO 2009/021500A1 vorgeschlagen, arbeiten. Vorzugsweise wird den Stangen zum Verlagern der Radsatzwelle je eine Messeinrichtung zur Positionsbestimmung zugeordnet. Zur Positionsmessung der Stange kann ein stählernes Messsystem mit digitaler Erfassung vorgesehen sein und eine Messschiene umfassen. Die Messeinrichtungen können sowohl an den Stangen selbst, aber auch an den sie verlagernden Verstelleinrichtungen und/oder an einem Koppelstück vorgesehen sein, welches die zugehörende Stange und ihre Verstelleinrichtung miteinander verbindet.

Die vorgenannten sowie die beanspruchten und in den Ausführungsbeispielen beschriebenen erfindungsgemäß zu verwendenden Bauteile unterliegen in ihrer Größe, Formgestaltung, Materialauswahl und technischen Konzeption keinen besonderen Ausnahmebedingungen, so dass die in dem Anwendungsgebiet bekannten Auswahlkriterien uneingeschränkt Anwendung finden können

Weitere Einzelheiten, Merkmale und Vorteile des Gegenstandes der Erfindung ergeben sich aus den Unteransprüchen, sowie aus der nachfolgenden Beschreibung und der zugehörigen Zeichnung, in der - beispielhaft - ein Ausführungsbeispiel einer Radsatzpresse zum Aufpressen von Radscheiben auf Radsatzwellen von Schienenfahrzeugen sowie Verfahren zum Aufpressen von Radscheiben auf Radsatzwellen von Schienenfahrzeugen dargestellt ist. Auch einzelne Merkmale der Ansprüche oder der Ausführungsformen können mit anderen Merkmalen anderer Ansprüche und Ausführungsformen kombiniert werden.

### DETAILLIERTE BESCHREIBUNG VON AUSFÜHRUNGSBEISPIELEN

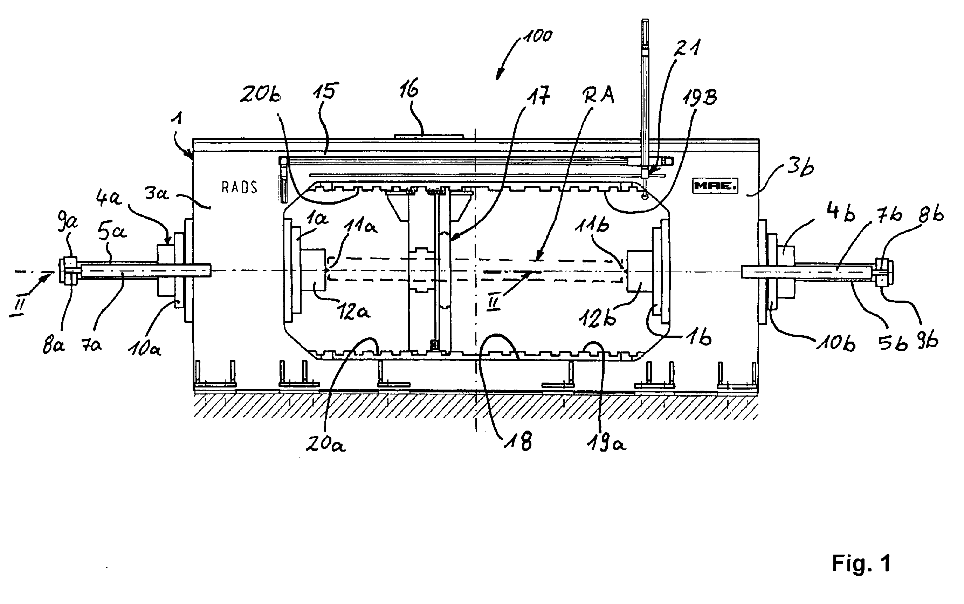

Figur 1 zeigt - für die vorliegende Erfindung lediglich beispielhaft - eine Radsatzpresse in Seitenansicht, wie sie in der WO 2009/039997A1 der Anmelderin, veröffentlicht am 02. April 2009, beschrieben ist, auf die hier Bezug genommen wird. Die aus Figur 1 ersichtliche Radsatzpresse 100 weist ein Pressengestell mit einem vertikalen, in Seitenansicht O-förmigen Pressrahmen 1 auf. Dieser nimmt in seinen seitlichen Pressenständern 3a, 3b je eine Kolben/Zylindereinheit 10a, 10b, mit Zentrierspitzen 11a, 11 b auf, die aufeinander zu weisen, sowie Druckstempel 12a, 12b.

Die Radsatzpresse kann auf ebenem Grund aufgestellt und verankert werden. Auf der einen Seite der oberen Verbindungssäule 15 ist in diesem Ausführungsbeispiel eine Schlittenanordnung mit entsprechenden Längsführungen und einem Spindelantrieb verfahrbar angeordnet. Diese kann eine oder mehrere Presswiderlager 17 in quer zur Radsatzwelle RA mittels Querführungen verschiebbarer Weise tragen, wenn die Radsatzpresse nicht nur dem Aufpressen von Radscheiben dienen, sondern sie multifunktionell sein soll. Durch ein Verschieben wird das betroffene Presswiderlager im Bedarfsfall von einer Arbeits- oder Fügeposition in eine Verfahrposition - bzw. umgekehrt -verlagert, z. B. wenn das Presswiderlager 17 in einer anderen Füge-Position zwischen den Pressenständern 3a, 3b, d. h. in einer anderen Schiebeführung 20a, 20 b, benötigt wird. Einer O-förmigen Öffnung 18 des Pressrahmens 1 zugewandte Verbindungselemente 19a, 19b können die seitlich voneinander beabstandeten Schiebeführungen 20a, 20b auf, die sich quer zur Radsatzwelle RA erstrecken und das Einschieben des in der Regel einzigen Presswiderlagers 17 in die Fügeposition sowie deren Herausziehen aus derselben quer zur Achsrichtung gestatten. Sie befinden sich vertikal übereinander und dienen als Widerlager in dem sich die Presswiderlager 17 abstützen.

Eine Messanordnung 21 ist der Schlittenanordnung gegenüberliegend an der oberen Verbindungssäule parallel zur Achsrichtung verfahrbar angeordnet.

Die Funktionsweise ist so, dass ein Radsatz, der bevorzugt aus einer Radsatzwelle RA und zwei Radscheiben RSa, RSb besteht, quer zu seiner Achse in die Position zwischen den Zentrierspitzen 11a, 11 b hinein gefahren wird. Nach Übernahme des Radsatzes durch die Zentrierspitzen kann der ganze Radsatz mittels der Kolben/Zylindereinheiten 10a, 10b zum Bewirken eines Zentrierens der Radsatzwelle (RA) verlagert werden. Wenn ein Widerlager 17 sich in seiner Arbeitsposition befindet, wird der Auf- oder Abpressvorgang in an sich bekannter Weise bewirkt.

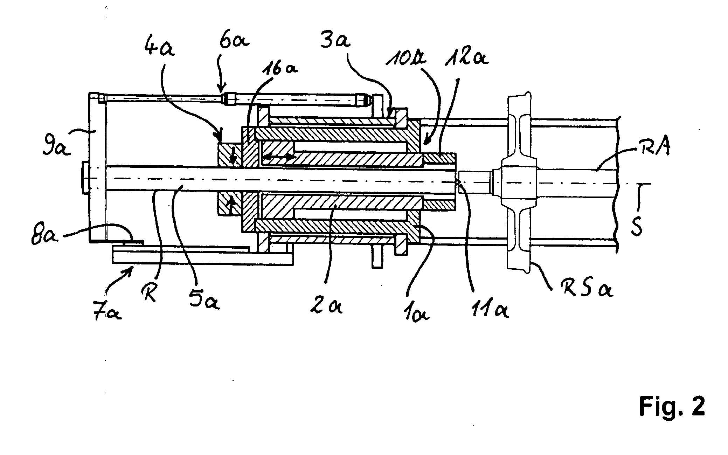

Figur 2 zeigt einen Ausschnitt aus dem linksseitigen Ende einer Radsatzpresse im Horizontalschnitt (Schnitt I-I aus Figur 1). Der Ausschnittsweise und im Horizontalschnitt dargestellte (in der Figur linke) Pressenständer 3a trägt einen Pressenzylinder 1 a, innerhalb dessen ein innen hohler Presskolben 2a doppelseitig hydraulisch betätigbar ist. Das (in der Zeichnung rechtsseitige) Stirnende des Presskolbens 2a ist als Druckstempel 12a zum Einwirken auf die Nabe der zugeordneten Radscheibe RSa ausgestattet. Innerhalb der so gebildeten Kolben/Zylinder-Einheit 10a ist, eine Stange 5a geführt, die an ihrem einen Ende eine Zentrierspitze als Mittel 11a zur Aufnahme des einen Endes der Radsatzwelle RA und an ihrem anderen Ende ein Koppelstück 9a trägt. Das Koppelstück 9a verbindet die Stange 5a mit einer als Kolben/Zylinder-Einheit ausgeführten Verstelleinrichtung 6a. Die Verstelleinrichtung 6a ist ihrerseits ortsfest am Pressenständer 3a abgestützt. Eine Messeinrichtung 7a wirkt mit einem Positionsgeber 8a, z.B. am Koppelstück 9a zusammen, um die Position der Zentrierspitze festzustellen.

Am außen liegenden (in der Figur 2 linken) Ende der Kolben-/Zylinder-Einheit 10a - oder am Pressenständer 3a - ist eine Fixiereinrichtung 4a in Gestalt einer mechanischen Klemmeinheit abgestützt, wie sie zum Beispiel als SITEMA-Klemmkopf bekannt ist.

Die Arbeitsweise dieser Vorrichtung ist folgende:
Die Radsatzwelle RA wird mit auf ihren Enden vorgefügten Radscheiben RSa, RSb (in der Zeichnung nicht dargestellt) mittels eines an sich bekannten Fördersystems in Flucht mit einer durch die Pressachse gehenden Gerade S gebracht. Die vorzugsweise beidseitigen, am Pressrahmen 1 vorgesehenen Stangen 5a und 5b fahren vor, bis die Radsatzwelle RA zwischen den als Zentrierspitzen ausgebildeten Mitteln 11a, 11 b zur Aufnahme der Radsatzwelle fixiert ist, wobei z.B. eine maximale Vortriebskraft in der Größenordnung von 20kN durch die Verstelleinrichtungen 6a, 6b aufgebracht wird. Empfindliche, z.B. auch für radiales Zentrieren der Radsatzwelle geeignete Zentrierspitzen können, wie an sich bekannt, in einem gewissen Rahmen axial elastisch nachgiebig gestaltet oder verlagerbar sein. Beide Stangen 5a, 5b (soweit vorhanden) werden sodann durch die jeweilige Fixiereinrichtung 4a, 4b an ihrem Umfang mechanisch, wie z.B. klemmend, fixiert. Nun fahren die Presskolben 2a, 2b vor und pressen die Radscheiben RSa, RSb an ihren Radnaben simultan auf die zugehörigen Enden der Radsatzwelle RA auf. Danach fahren beide Presskolben 2a, 2b zurück. Anschließend fahren die Stangen 5a, 5b zurück und der fertig montierte Radsatz wird durch das Transportsystem wieder entladen. Ohne das Be- und Entladen beträgt die Taktzeit lediglich etwa 125 Sekunden bei einer Aufpressgeschwindigkeit von 2 mm/s und etwa 225 Sekunden bei einer Aufpressgeschwindigkeit von 1 mm/s. Dabei benötigt das Vorfahren der Stangen bei einem Hub von etwa 300 mm lediglich etwa 4 Sekunden und das Fixieren durch die Fixiereinrichtung etwa 2 Sekunden. Presskolben werden im Eilgang bei etwa 30 mm/s innerhalb von etwa 4 Sekunden in ihre Pressposition vorgefahren und das nachfolgende Aufpressen dauert ungefähr 100 Sekunden bei 2 mm/s. Für das Zurückfahren der Presskolben werden etwa 7 Sekunden und für das Rückfahren der Stangen etwa 4 Sekunden benötigt. Dieser Vorgang findet synchron an beiden Enden der Radsatzwelle statt.

Beim Abziehen der Radscheiben von der Welle geht man in bekannter und z.B. in der WO 2009/039997 A1 beschriebenen Weise vor.

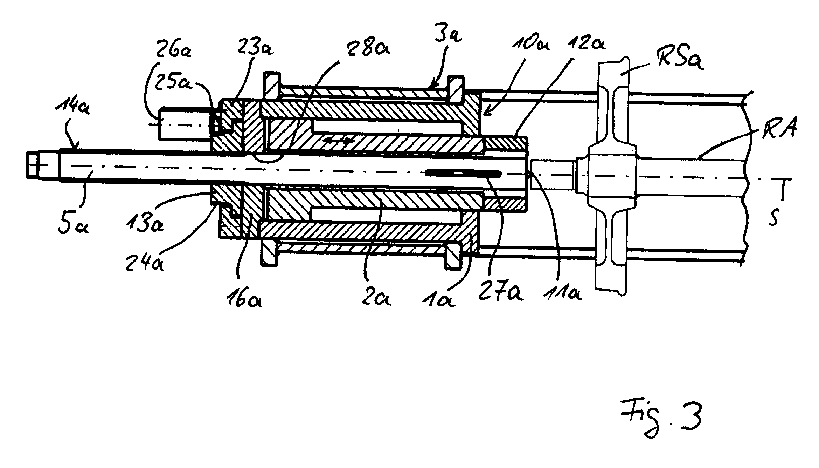

Figur 3 zeigt eine alternative Ausführungsform der Erfindung in gleicher Darstellungsweise wie die Figur 2. Bei der Ausführungsform nach Figur 3 dienen Spindelantriebe als Mittel zum zentrierenden Verlagern der Radsatzwelle RA in Achsrichtung und gleichzeitig als lösbare Fixiereinrichtungen 4a, 4b zum Fixieren der Stangen 5a, 5b sowie der Radsatzwelle RA in der Zentrierposition. Wie im Einzelnen aus Figur 3 ersichtlich sind die Stangen 5a und 5b (letztere in der Zeichnung nicht dargestellt) jeweils mit einem Außengewinde 14a bzw. 14b (letzteres in der Zeichnung nicht dargestellt) versehen. Die Außengewinde erstrecken sich vorzugweise nur über ihren außen liegenden (in der Zeichnung für Stange 5a links liegenden) Längenbereich. Eine Dichtbuchse 28a, 28b, die zum Beispiel im Bereich eines Gehäusedeckels 16a oder (nicht dargestellt)16b der Kolben/Zylinder-Einheit 10a, 10b vorgesehen sein kann, verhindert das Auslaufen von Hydrauliköl aus der Kolben/Zylinder-Einheit über das Gewinde 14a, 14b. Eine Verdrehsicherung 27a, 27b, zum Beispiel in Gestalt einer Passfedernut auf dem Außenumfang der Stange 5a, 5b, die zum Beispiel mit dem Presskolben 2a/b zusammen wirken kann, hält die Stange 5a/b verdrehgesichert aber gleichwohl längsbewegbar. Als Antriebs- und gleichzeitig als Fixiereinrichtung zum Verlagern der Stange 5a, 5b in deren Achsrichtung dient beispielsweise eine Gewindemutter 13a, 13b, die mit ihrem Innengewinde mit dem Außengewinde 14a, 14b der Stange 5a, 5b in drehendem Eingriff steht. Diese Gewindemutter 13a,bn 13b kann durch ein Haltemittel, wie ein flanschartiges Bauteil 23a, 23b in Längsrichtung der Kolben/Zylinder-Einheit, aber um seine Achse drehbar, in Position gehalten werden. In der Zeichnung liegt das eine Stirnende der Gewindemutter 13a, 13b an der zugeordneten Stirnseite des Gehäusedeckels 16a, 16b in verdrehbarer Form an.

Wenn nun die Gewindemutter 13a, 13b um ihre Achse verdreht wird, verstellt sich die Stange 5a, 5b aufgrund des Eingriffs ihres Außengewindes mit dem Innengewinde der Gewindemutter in axialer Richtung und verlagert so die Zentrierspitze 11a, 11b.

Um den so gebildeten Spindelantrieb besonders einfach betätigen zu können, kann ein Antrieb, zum Beispiel ein Elektromotor 26a, 26b über ein Antriebsritzel 25a, 25b mit einer Außenverzahnung oder einem Außengewinde 24a, 24b der Gewindemutter 13a, 13b im Antriebssinne im Eingriff stehen. Dadurch entsteht ein motorisch angetriebener Spindelantrieb. Eine einmal eingestellte Längsposition der Stange 5a, 5b bezüglich der zugehörenden Kolben/Zylinder-Einheit bleibt aufgrund Selbsthemmung erhalten, wenn die Gewindemutter 13a, 13b nicht weiter verstellt wird.

Somit können auf einfache Weise die zum zentrierenden Verlagern der Radsatzwelle RA dienenden Stangen 5a, 5b verlagert und lösbar fixiert werden. Das Lösen der Fixierung erfolgt durch Drehen der Gewindemutter.

### BEZUGSZEICHENLISTE

- 1: Pressrahmen
- 1 a/b: Presszylinder
- 2 a/b: Presskolben
- 3 a/b: Pressenständer
- 4 a/b: Fixiereinrichtung
- 5 a/b: Stange
- 6 a/b: Verstelleinrichtung
- 7 a/b: Messeinrichtung
- 8 a/b: Positionsgeber
- 9 a/b: Koppelstück
- 10 a/b: Kolben/Zylinder-Einheiten
- 11 a/b: Mittel zur Aufnahme
- 12 a/b: Druckstempel
- 13 a/b: Gewindemutter
- 14 a/b: Außengewinde
- 15: Verbindungssäule
- 16 a/b: Deckel
- 17: Presswiderlager
- 18: Öffnung
- 19a/b: Verbindungselemente
- 20a/b: Schiebeführungen
- 21: Messanordnung
- 23 a/b: Halteelement
- 24 a/b: Außengewinde
- 25 a/b: Ritzel
- 26 a/b: E-Motor
- 27a/b: Verdrehsicherung
- 28 a/b: Dichtbuchse
- 100: Radsatzpresse
- R: Umfang
- RSa: Radscheibe
- RSb: Radscheibe
- RA: Radsatzwelle
- S: Gerade

## Patentansprüche

1. Radsatzpresse zum Aufpressen von Radscheiben (RSa, RSb) auf Radsatzwellen (RA) von Schienenfahrzeugen, mit zwei auf einer gemeinsamen Gerade (S) an feststehenden Pressenständern (3a, 3b) angeordneten, gegeneinander gerichteten Kolben/Zylinder-Einheiten (10a, 10b) zum Aufbringen des notwendigen Pressdrucks,
mit Mitteln (11a, 11 b) zur Aufnahme einer Radsatzwelle (RA) in der Radsatzpresse für den Pressvorgang, wie zwei einander gegenüberliegende Zentrierspitzen, und
mit Mitteln zur Verlagerung der Radsatzwelle (RA) in Längsrichtung der Radsatzwelle zum Bewirken eines Zentrierens der Radsatzwelle (RA)
wobei zum Übertragen der Presskraft auf das zugewandte Ende der zugehörenden Radscheibe (RSa, RSb) ein innen hohler Druckstempel (12a, 12b) an jeder der Kolbenzylindereinheiten (10a, 10b) vorgesehen ist, wobei durch mindestens einen der Druckstempel mindestens ein Mittel zum Verlagern der Radsatzwelle (RA) hindurchgeführt ist,
**gekennzeichnet durch**
mindestens eine, insbesondere mechanische, am Umfang (R) mindestens einer als Mittel zum Verlagern der Radsatzwelle (RA) dienenden Stange (5a, 5b) angreifenden, lösbaren Fixiereinrichtung (4a, 4b) zum, insbesondere mechanischen, Längsfixieren der mindestens einen Stange (5a, 5b) und der Radsatzwelle (RA) in der Zentrierposition.

2. Radsatzpresse nach Anspruch 1, **dadurch gekennzeichnet, dass** die Fixiereinrichtung (4a, 4b) eine radialwirkende Klemmeinrichtung ist.

3. Radsatzpresse nach Anspruch 1, **dadurch gekennzeichnet, dass** die Fixiereinrichtung (4a, 4b) einen Spindeltrieb umfasst.

4. Radsatzpresse nach Anspruch 3, **dadurch gekennzeichnet, dass** die mindestens eine Stange (5a, 5b) ein Außengewinde (14, 14b) trägt, das sich an einem Innengewinde abstützt.

5. Radsatzpresse nach einem der Ansprüche 1 bis 4, **dadurch gekennzeichnet, dass** die Fixiereinrichtung (4a, 4b) an dem zugehörenden Pressenständer (3a, 3b) oder an der zugehörenden Kolben/Zylinder-Einheit (10a, 10b) abgestützt ist.

6. Radsatzpresse nach einem der Ansprüche 1 bis 5 **dadurch gekennzeichnet, dass** die Stange (5a, 5b) kolbenfrei gestaltet ist.

7. Radsatzpresse nach einem der Ansprüche 1 bis 6, **dadurch gekennzeichnet, dass** die Druckstempel (12a, 12b) gleichzeitig auf die beiden Radscheiben (RSa, RSb) einwirken.

8. Radsatzpresse nach einem der Ansprüche 1 bis 7, **gekennzeichnet durch** eine außerhalb der zugehörenden Kolben/Zylinder-Einheit (10a, 10b) zum Aufpressen der zugehörenden Radscheiben (RSa, RSb) angeordnete Verstelleinrichtung (6a, 6b) zum Verlagern der Radsatzwelle (RA).

9. Radsatzpresse nach Anspruch 8, **dadurch gekennzeichnet, dass** die Verstelleinrichtungen (6a, 6b) an dem zugehörenden Pressenständer (3a, 3b) abgestützt ist.

10. Radsatzpresse nach einem der Ansprüche 1 bis 9, **dadurch gekennzeichnet, dass** der Stange (5a, 5b) eine Messeinrichtung (7a, 7b) zur Positionsbestimmung der Mittel (11a, 11 b) zur Aufnahme der Radsatzwelle (RA) zugeordnet ist.

11. Radsatzpresse nach einem der Ansprüche 8 bis 10, **dadurch gekennzeichnet, dass** die Verstelleinrichtung (6a, 6b) mit einer Schließkraft in der Größenordnung des Gewichts eines Radsatzes (RA, RSa, RSb) ausgelegt ist.

12. Verfahren zum Aufpressen von Radscheiben auf Radsatzwellen von Schienenfahrzeugen, bei dem ein vorgefügter Radsatz zunächst in eine Radsatzpresse quer zur Radsatzwelle eingebracht und anschließend von Zentriermitteln der Radsatzpresse in der Radsatzpresse in einer Zentrierposition aufgenommen wird,
**dadurch gekennzeichnet,**
**dass** die Zentriermittel in der erreichten Zentrierposition mittels einer am Umfang einer als Mittel zum Verlagern der Radsatzwelle dienenden Stange angreifenden lösbaren Fixiereinrichtung mechanisch in der Zentrierposition fixiert wird und
nachfolgend die beiderseitigen Radscheiben auf die zugehörende Radsatzwelle durch gleichzeitiges Betätigen der beiderseitigen Kolben/ZylinderEinheiten unter Aufbringen des notwendigen Pressdrucks aufgepresst werden.

## Claims

1. A wheel set press for pressing wheel discs (RSa, RSb) onto wheel set shafts (RA) of rail vehicles, with two piston/cylinder units (10a, 10b) for applying the necessary pressing force, said piston/cylinder units being directed towards one another and disposed on a common straight line (S) on fixed press stands (3a, 3b),
with means (11a, 11b) for accommodating a wheel set shaft (RA) in the wheel set press for the pressing process, such as two centre points lying opposite one another, and
with means for displacing the wheel set shaft (RA) in the longitudinal direction of the wheel set shaft in order to bring about the centring of the wheel set shaft (RA),
wherein an internally hollow pressure ram (12a, 12b) is provided on each of the piston-cylinder units (10a, 10b) in order to transfer the pressing force to the facing end of the respective wheel disc (RSa, RSb), wherein at least one means for displacing the wheel set shaft (RA) is passed through at least one of the pressure rams,
**characterised by**
at least one, in particular mechanical, detachable fixing device (4a, 4b) for the, in particular mechanical, longitudinal fixing of at least one rod (5a, 5b) and the wheel set shaft (RA) in the centring position, said fixing device engaging at the periphery (R) of the at least one rod (5a, 5b) serving as a means for the displacement of the wheel set shaft (RA).

2. The wheel set press according to claim 1, **characterised in that** the fixing device (4a, 4b) is a radially acting clamping device.

3. The wheel set press according to claim 1, **characterised in that** the fixing device (4a, 4b) comprises a spindle drive.

4. The wheel set press according to claim 3, **characterised in that** the at least one rod (5a, 5b) has an external thread (14, 14b) which rests on an internal thread.

5. The wheel set press according to any one of claims 1 to 4, **characterised in that** the fixing device (4a, 4b) is supported on the associated press stands (3a, 3b) or on the associated piston/cylinder unit (10a, 10b).

6. The wheel set press according to any one of claims 1 to 5, **characterised in that** the rod (5a, 5b) is constituted piston-free.

7. The wheel set press according to any one of claims 1 to 6, **characterised in that** the pressure ram (12a, 12b) acts simultaneously on the two wheel discs (RSa, RSb).

8. The wheel set press according to any one of claims 1 to 7, **characterised by** an adjusting device (6a, 6b) for displacing the wheel set shaft (RA), said adjusting device being disposed outside the associated piston/cylinder unit (10a, 10b) for the pressing-on of the associated wheel discs (RSa, RSb).

9. The wheel set press according to claim 8, **characterised in that** the adjusting devices (6a, 6b) are supported on the associated press stands (3a, 3b).

10. The wheel set press according to any one of claims 1 to 9, **characterised in that** a measuring device (7a, 7b) for the position determination of the means (11a, 11b) for accommodating the wheel set shaft (RA) is assigned to the rod (5a, 5b).

11. The wheel set press according to any one of claims 8 to 10, **characterised in that** the adjusting device (6a, 6b) is designed with a closing force in the order of magnitude of the weight of a wheel set (RA, Rsa, RSb).

12. A method for pressing wheel discs onto wheel set shafts of rail vehicles, wherein a pre-assembled wheel set is first introduced into a wheel set press at right angles to the wheel set shaft and is then accommodated in a centring position in the wheel set press by centring means of the wheel set press,
**characterised in that**
the centring means in the reached centring position is fixed mechanically in the centring position by means of an engaging detachable fixing device at the periphery of a rod serving as means for displacing the wheel set shaft and
the two-sided wheel discs are then pressed onto the associated wheel set shaft by simultaneous actuation of the two-sided piston/cylinder units, the necessary pressing force thereby being applied.

## Revendications

1. Presse pour essieux pour l'application de disques de roues (RSa, RSb) sur des arbres d'essieu (RA) de véhicules sur rails, avec deux unités piston/cylindre (10a, 10b) orientées l'une vers l'autre et agencées sur des montants de presse (3a, 3b) fixes, sur une droite commune (S), pour l'application de la pression de pressage nécessaire,
avec des moyens (11a, 11b) pour la réception d'un arbre d'essieu (RA) dans la presse pour essieux pour l'opération de pressage, comme deux pointes de centrage opposées, et
avec des moyens pour le déplacement de l'arbre d'essieu (RA) dans le sens longitudinal de l'arbre d'essieu, afin d'assurer un centrage de l'arbre d'essieu (RA),
dans laquelle, pour la transmission de la force de pressage sur l'extrémité exposée du disques de roues (RSa, RSb) correspondant, un piston à pression (12a, 12b) creux à l'intérieur est prévu sur chaque unités piston/cylindre (10a, 10b), dans laquelle au moins un moyen pour le déplacement de l'arbre d'essieu (RA) est introduit à travers au moins l'un des pistons à pression,
**caractérisée par**
au moins un dispositif de fixation (4a, 4b) amovible, en particulier mécanique, agissant sur le pourtour (R) d'au moins une barre (5a, 5b) servant de moyen pour le déplacement de l'arbre d'essieu (RA), pour la fixation longitudinale, en particulier mécanique, de l'au moins une barre (5a, 5b) et de l'arbre d'essieu (RA) dans la position de centrage.

2. Presse pour essieux selon la revendication 1, **caractérisée en ce que** le dispositif de fixation (4a, 4b) est un dispositif de serrage agissant radialement.

3. Presse pour essieux selon la revendication 1, **caractérisée en ce que** le dispositif de fixation (4a, 4b) comprend un entraînement à broche.

4. Presse pour essieux selon la revendication 3, **caractérisée en ce que** l'au moins une barre (5a, 5b) porte un filet extérieur (14, 14b) appuyé sur un filet intérieur.

5. Presse pour essieux selon l'une des revendications 1 à 4, **caractérisée en ce que** le dispositif de fixation (4a, 4b) s'appuie sur le montant de presse (3a, 3b) correspondant ou sur l'unité piston/cylindre (10a, 10b) correspondante.

6. Presse pour essieux selon l'une des revendications 1 à 5, **caractérisée en ce que** la barre (5a, 5b) est conçue sans piston.

7. Presse pour essieux selon l'une des revendications 1 à 6, **caractérisée en ce que** les pistons à pression (12a, 12b) agissent simultanément sur les deux disques de roues (RSa, RSb).

8. Presse pour essieux selon l'une des revendications 1 à 7, **caractérisée par** un dispositif de réglage (6a, 6b) agencé à l'extérieur de l'unités piston/cylindre (10a, 10b) correspondante pour l'application des disques de roues (RSa, RSb) correspondants, en vue du déplacement de l'arbre d'essieu (RA).

9. Presse pour essieux selon la revendication 8, **caractérisée en ce que** le dispositif de réglage (6a, 6b) s'appuie sur le montant de presse (3a, 3b) correspondant.

10. Presse pour essieux selon l'une des revendications 1 à 9, **caractérisée en ce qu'**un dispositif de mesure (7a, 7b) est attribué à la barre (5a, 5b), pour la détermination de la position des moyens (11a, 11b) pour la réception de l'arbre d'essieu (RA).

11. Presse pour essieux selon l'une des revendications 8 à 10, **caractérisée en ce que** le dispositif de réglage (6a, 6b) est conçu avec une force de fermeture de l'ordre de grandeur du poids d'un essieu (RA, RSa, RSb).

12. Procédé pour l'application par pressage de disques de roues sur des arbres d'essieu de véhicules sur rails, dans lequel un essieu préalablement fourni est tout d'abord inséré dans une presse pour essieux, transversalement à l'arbre d'essieu, puis reçu dans une position de centrage dans la presse pour essieux, par des moyens de centrage de la presse pour essieux,
**caractérisé en ce que**
lorsque la position de centrage est atteinte, les moyens de centrage est fixé mécaniquement dans la position de centrage au moyen d'un dispositif de fixation amovible agissant sur une barre servant de moyen pour le déplacement de l'arbre d'essieu, et
les disques de roues bilatéraux sont ensuite appliqués par pressage sur l'arbre d'essieu correspondant, par un actionnement simultané des unités piston/cylindre bilatérales, en appliquant la pression de pressage nécessaire.
